Europäisches Patentamt

**European Patent Office**

**Office européen des brevets**

(19)

(11) Numéro de publication: **0 381 277**

**A1**

(12)

# DEMANDE DE BREVET EUROPEEN

(21) Numéro de dépôt: **90200192.4**

(22) Date de dépôt: **29.01.90**

(51) Int. Cl.⁵: **B23H 7/10**

(30) Priorité: **31.01.89 CH 325/89**

(43) Date de publication de la demande:
**08.08.90 Bulletin 90/32**

(84) Etats contractants désignés:
**CH DE ES FR GB IT LI**

(71) Demandeur: **CHARMILLES TECHNOLOGIES S.A.**
**8-10, rue du Pré-de-la-Fontaine**
**CH-1217 Meyrin 1(CH)**

(72) Inventeur: **Matter, Daniel**
**5, chemin du Petit-Bois**
**CH-1219 Chatelaine/Ge(CH)**

(74) Mandataire: **Hugelin, Christiane**
**c/o CHARMILLES TECHNOLOGIES SA Case**
**postale 373**
**CH-1217 Meyrin 1(CH)**

(54) **Dispositif d'injection et machine d'électroérosion à fil-électrode pour usiner à grande vitesse avec précision.**

(57) Le dispositif d'injection pour liquide d'usinage comporte une buse 9 coulissant dans un élément mobile 7 qui coulisse lui-même dans un boîtier 1 fixé à une tête d'usinage, ces trois organes délimitant une chambre d'injection 2 avec la base de cette tête. La buse 9 et l'élément mobile 7 sont profilés de manière à délimiter une chambre de pression 30 le long de l'une des faces 31 d'un épaulement 11 ménagé à la périphérie de la buse 9, ainsi qu'une deuxième chambre 20 le long de la face opposée de cet épaulement 11. La buse 9 présente des orifices 28 faisant communiquer cette chambre de pression 30 avec la chambre d'injection 2. L'élément mobile 7 présente des orifices 10 mettant la chambre 20 en communication avec la pression atmosphérique. L'épaulement 11 est dimensionné de manière à ce que la pression régnant dans la chambre 30 contrebalance au moins en partie la pression régnant dans la chambre d'injection 2 et agisse sur la buse 9 en sens opposé.

EP 0 381 277 A1

## DISPOSITIF D'INJECTION ET MACHINE D'ELECTROEROSION A FIL-ELECTRODE POUR USINER A GRANDE VITESSE AVEC PRECISION

La présente invention a trait à un dispositif monté dans un tête d'usinage et capable d'injecter un liquide d'usinage sous pression le long d'un fil-électrode pour irriguer la fente usinée dans la pièce par ce fil; elle concerne aussi un dispositif coulissant le long de ce dernier dans un boitier fixé à la tête d'usinage ; elle concerne en particulier un dispositif permettant à une machine EDM à fil d'usiner à grande vitesse et avec précision.

Dans ce type de machine-outil, un fil-électrode défile en continu le long d'une ligne idéale joignant deux guides-fil (et définissant la zone d'usinage), depuis un système d'alimentation jusqu'à un système de reprise. Par "fil"-électrode on entend aussi toute électrode-outil se renouvellant sans cesse par une translation à travers la zone d'usinage, quel que soit le profil de sa section, tels des rubans, bandes, etc... Son épaisseur est de l'ordre de quelques dixièmes ou centièmes de millimètres.

Par "électroérosion", on entend une méthode d'usinage selon laquelle on introduit un liquide d'usinage dans la zone où le fil-électrode (alimenté en courant électrique) est rapproché de la pièce à usiner. Le rôle de ce liquide est en particulier d'éliminer de cette zone les débris arrachés de la pièce usinée et de refroidir le fil-électrode ainsi que, dans certains cas, les contacts qui l'alimentent en courant électrique. Ce liquide est en général diélectrique et est constitué, par exemple, par de l'eau déionisée ou un mélange d'eau et d'hydrocarbures. L'usinage est réalisé en enfilant le fil-électrode à travers un orifice traversant la pièce (ou en le mettant en contact avec un bord de la pièce), en l'alimentant en courant électrique par deux contacts situés de part et d'autre de la pièce, et en envoyant des impulsions de différence de potentiel entre électrode-outil et pièce à usiner de manière à créer des décharges électriques dans la zone d'usinage, ces dernières arrachant surtout de la matière à la pièce (et un peu à l'outil). Une fente est ainsi réalisée dans la pièce au fur et à mesure que le fil et la pièce se déplacent relativement l'un à l'autre, en général le long d'une trajectoire préprogrammée. Dans la plupart des machines connues, la pièce et le guide-fil supérieur se déplacent chacun dans un plan horizontal, dans un mouvement pouvant se décomposer selon deux axes perpendiculaires (axes X et Y pour la pièce, axes U et V pour le guide-fil), ce qui permet d'incliner le fil par rapport à la verticale; le guide-fil supérieur est mobile le long d'un axe vertical (axe Z), et la distance entre les deux guides-fil est ainsi réglable. Comme indiqué ci-dessus, les guides-fil et les contacts amenant le courant d'usinage au fil sont montés dans deux têtes d'usinage disposées de part et d'autre de la pièce; le dispositif qui permet de déplacer la tête supérieure de manière contrôlée dans un plan horizontal et d'incliner ainsi le fil en oblique. selon un angle de dépouille donné, comporte en général une table à mouvements croisés montée en encorbellement à l'extrémité du bras supérieur, et sous laquelle la tête est fixée par un système à console.

Chacune de ces têtes est munie d'une partie creuse située à l'extrémité en regard de la pièce à usiner. Cette structure tubulaire, appelée par la suite "boîtier", présente un rebord permettant de retenir l'ensemble des organes qui permettent d'injecter le liquide diélectrique dans la fente d'usinage et qui comporte au moins une buse. Ce boîtier est muni d'au moins un orifice d'amenée de liquide, relié à une électrovanne par exemple, elle-même reliée à la commande numérique de la machine EDM afin de contrôler la pression d'injection de ce liquide. Ce boîtier présente également un fourreau traversé par le fil-électrode et dans lequel est monté un guide maintenant le fil dans l'axe de la tête; ce fourreau peut être muni d'une amenée de liquide et profilé de manière à canaliser ce liquide de façon à former un jet le long du fil. par exemple dans le cas où on refroidit les guides-fil et les contacts d'amenée de courant. Ce fourreau communique avec l'orifice de la buse.

Une chambre d'injection est délimitée par la face de la tête d'usinage en regard de la pièce à usiner, la paroi tubulaire du boîtier et celle de la buse ou de l'ensemble des organes permettant l'injection.

On a vu que des moyens sont en général prévus pour régler et faire varier la distance entre le guide-fil supérieur et la surface de la pièce à usiner; ceci permet d'amener l'extrémité du boitier et donc la buse à proximité de la fente d'usinage et même en contact avec la pièce, en particulier pour faciliter l'enfilage du fil-électrode à travers l'orifice de départ avant de commencer l'usinage, ou son réenfilage après rupture. Aux fortes pressions, il est recommandé dans l'état de la technique de plaquer fortement le dispositif d'injection contre la pièce afin d'éviter les vibrations et turbulences dues aux fuites de liquide sous-pression entre buse et pièce.

L'état de la technique mentionne également des moyens prévus sur des machines d'électroérosion à fil pour faire coulisser des organes d'injection dans le boîtier de la tête d'usinage, en particulier le long de l'axe du fil-électrode.

En général, il s'agit de buses coulissant le long du fil sous l'effet de la pression régnant dans la chambre d'injection, depuis une position de repos jusqu'à une position de travail où elles sont en contact ou très proches de la surface de la pièce à usiner. Leur course est limitée par une butée ou par la surface de la pièce elle-même. Dans le cas d'une buse montée sur la tête inférieure, cette buse peut être ramenée en position de repos après l'arrêt de l'amenée de liquide sous pression, sous l'effet de son propre poids. Le retour à la position de repos peut être réalisé dans tous les cas grâce à un ressort de rappel. Citons comme exemple les dispositifs décrits dans EP 142.034 ou certains de ceux illustrés dans US 4.704.511 (fig. 3 et 4) ou dans US 4.481.095 (fig. 3 et 4), ou encore à la figure 4 de US 4.675.492, dans lesquels la position de la buse est le résultat d'un équilibre entre la pression dans la chambre d'injection, la force de rappel due au poids de la buse et/ou à un ressort, ainsi que la résistance opposée par le liquide injecté entre le nez de la buse et la surface de la pièce.

Un autre type de buses coulissantes, qui sous l'effet d'un choc par exemple, peuvent se rétracter dans le boîtier, sont décrites par exemple dans EP 271.439 ou dans US 4.675.492. Afin de maintenir si possible la buse le plus près possible de la pièce lors de l'usinage ou de lui permettre de pivoter autour d'un axe vertical par exemple, ou encore pour diminuer la pression éventuellement exercée sur la surface de la pièce par le nez de la buse, on a proposé de monter la buse dans le boîtier de manière résiliente, (ou "flottante" ou "élastique")
- grâce, par exemple, à des ressorts disposés de part et d'autre d'un épaulement ménagé à la périphérie de la buse, dans des espaces entre boîtier et buse, et venant s'appuyer sur un rebord du boîtier formant butée et sur l'extrémité de la tête délimitant la chambre d'injection, comme dans le dispositif décrit à la figure 2 du US 4.704.511, ou encore
- grâce à un montage comme celui décrit à la figure 4 du US 4.675.492, selon lequel une portion du fluide est injectée de façon à contrebalancer en partie la pression de la chambre d'injection sur la buse inférieure afin de diminuer la force avec laquelle celle-ci est plaquée contre la pièce.

Dans le cas de ces buses "flottantes" également, la distance séparant le nez de la buse de la surface de la pièce est le résultat d'un équilibre entre la pression dans la chambre d'injection, les forces exercées sur l'épaulement ménagé autour de la buse, le poids de celle-ci, ainsi que la résistance opposée par le liquide comprimé entre le nez de la buse et la surface de la pièce.

Toutefois, aucun de ces dispositifs connus ne pallie les inconvénients dus à l'apparition de forces de réaction provoquées par l'injection d'un liquide sous pression dans la fente d'usinage. Ces forces se transmettent par la chambre d'injection à la tête d'usinage et de là, au mécanisme monté sur cette dernière dans certains types de machines et permettant d'incliner le fil en commandant les déplacements de cette tête dans un plan parallèle au plan de travail (défini par les axes U et V). Ces forces tendent à soulever la tête ou cet ensemble. Ceci modifie le positionnement du (ou des) guide-(s)-fil monté(s) dans cette tête d'usinage et, le cas échéant, aussi l'inclinaison du fil. Cette déviation du fil de sa trajectoire de découpe fausse la géométrie de la pièce usinée et amène une perte de précision.

Ce défaut augmente avec la pression d'injection et devient donc sensible surtout lorsqu'on usine à grande vitesse et donc avec de fortes pressions d'injection qui peuvent atteindre quelques dizaines d'atmosphères. Or, de telles pressions deviennent alors nécessaires, car l'échauffement du fil et l'enlèvement de matière augmentent avec la vitesse d'usinage.

De plus, ces forces de réaction varient avec le type de dispositif d'injection et avec son mode d'utilisation, en particulier selon le fait d'utiliser une buse restant à faible distance de la pièce ou venant vraiment en contact avec cette dernière.

Il est possible de s'opposer par certains moyens à la poussée appliquée au dispositif d'injection par le jet émis par la buse et par le volume de liquide comprimé entre la pièce et le nez de la buse lorsque cette dernière n'est pas plaquée contre la pièce et causant le retrait de la buse, mais cet effort se transmet alors à la tête d'usinage et éventuellement à la table à mouvements croisés commandant les déplacements de celle-ci avec les inconvénients mentionnés ci-dessus.

Un dispositif contrebalaçant ces forces de réaction par l'injection de liquide à la même pression dans un organe agencé pour exercer une force de réaction de sens opposé sur le mécanisme à mouvements croisés est décrit dans le brevet EP 229.186, mais ceci nécessite une modification importante de l'appareillage et augmente l'encombrement dans la zone d'usinage.

C'est pourquoi le but de la présente invention était un dispositif d'injection , tel que défini en introduction, et capable de diminuer fortement , c'est-à-dire dans une mesure qui conserve une précision acceptable à un usinage réalisé à pression d'injection élevée, la résultante des forces exercées du fait de l'émission d'un jet sous pression, sur la tête d'usinage sur laquelle il est monté, (et, le cas échéant, sur les mécanismes commandant ses déplacements)

Une première mesure a été de profiler le "nez" de la buse de manière à ce que cette section soit aussi petite que possible, et une buse à petit jet a été réalisée par la demanderesse et décrite dans le EP 271.439. Il s'agit d'un dispositif présentant un élément d'injection dont l'embouchure est garnie d'un ajutage amovible coulissant dans un élément tronconique qui coulisse lui-même dans un élément tubulaire fixé à l'extrémité de la tête d'usinage, ces deux éléments délimitant une chambre d'injection avec l'extrémité de la tête d'usinage. Ce dispositif était conçu pour être maintenu à une distance donnée de la surface de la pièce. Toutefois, la diminution de poussée ainsi obtenue n'est pas suffisante pour utiliser de plus fortes pressions d'injection, ce qui a conduit à modifier la structure même de ce dispositif.

La présente invention a donc pour objet un dispositif d'injection tel que défini à la revendication 1 , ainsi qu'une machine d'électroérosion munie d'au moins un dispositif de ce type , telle que définie à la revendication 8 , et qu'un procédé de mise en action de ce dispositif, tel que défini à la revendication 10.

Signalons que le dispositif d'injection selon la présente invention peut être utilisé avec avantages dans d'autres domaines que celui des machines d'électroérosion à fil.

L'un des avantages de la buse d'un dispositif selon la présente invention est de pouvoir être mise en équilibre lors de la mise sous pression du dispositif d'injection et, par conséquent, de ne plus provoquer de forces de réaction dues à une pression exercée par elle sur la pièce ou le film de liquide sous pression la séparant du dispositif d'injection. En effet, il est possible de la dimensionner de façon appropriée pour que la poussée exercée sur elle par le liquide de la chambre de pression contrebalance en partie ou même équilibre la composante, parallèle à cette poussée, de la pression exercée sur elle par le liquide de la chambre d'injection, en particulier en dimensionnant son épaulement. Les forces de recul dues au frottement du liquide sur la buse , ainsi que son poids, sont négligeables. Il est donc possible de conformer la buse de la tête supérieure comme celle de la tête inférieure.

Un autre avantage de cette buse est dû à la possibilité de la dimensionner de façon qu'elle ne jaillisse de l'élément mobile que lorsque la force du jet est diminuée suite à sa rencontre avec un obstacle. Lors de la mise sous pression de la chambre d'injection, la pièce mobile coulisse dans le boîtier de façon à sortir au maximum de ce dernier. Mais, si le jet ne vient pas percuter d'obstacle proche, la pression régnant dans la chambre d'injection doit, de préférence, être insuffisante pour contrebalancer la pression régnant dans la chambre de pression et rétractant la buse. Ce n'est que lorsque le jet rencontre un tel obstacle que la buse peut sortir de l'élément mobile. Ceci supprime tout risque de collision de la buse avec un coin de la pièce, par exemple. En effet, avec les buses sortant de leur logement dès l'établissement de la pression d'injection, il fallait régler avec une grande précision (de l'ordre du dixième de millimètre) la distance entre le dispositif d'injection et la surface de la pièce :

- trop grande, l'espace buse-pièce était trop important et l'injection trop peu efficace;
- trop faible, la buse venait heurter la pièce, ou bien, sortie alors que la tête n'était pas encore en regard de la pièce, elle venait buter contre celle-ci.

Un réglage minutieux de la distance entre le dispositif d'injection et la pièce ainsi que la synchronisation de l'établissement de la pression d'injection et de l'arrivée de la tête face à la pièce ne sont plus nécessaires ici : la buse ne sort que lorsque le dispositif est en regard de la pièce, et dès que cela se produit; par suite de sa constitution "flottante", elle s'arrête exactement à la hauteur voulue, c'est-à-dire dès qu'elle vient en contact avec la pièce, sans percuter cette dernière.

Cet ajustement est automatique et précis et n'est soumis à aucun signal de la commande numérique de la machine EDM. Il a aussi l'avantage d'être pratiquement instantané. De part et d'autre de la pièce la position des buses s'adapte ainsi instantanément et automatiquement à la hauteur de cette pièce sans qu'aucune mesure de cette hauteur et aucune programmation ne soient nécessaires au préalable.

De plus , le présent dispositif prend en compte toute variation de cette hauteur, au fur et à mesure que les buses se déplacent le long de la trajectoire à découper. En effet, chaque buse peut suivre la surface de la pièce, même lorsque celle-ci présente des irrégularités (creux ou reliefs), à condition que la surface de ces dernières soit supérieure à celle de la section de la buse. Aucune programmation tenant compte des dénivelées de la pièce n'est plus nécessaire.

Enfin, cette buse conserve les avantages de celles décrites dans EP 271 439 : elle peut se rétracter automatiquement afin d'enjamber les obstacles , tels les éléments de bridage . Ce mouvement peut s'effectuer en réponse à un signal émis par la commande numérique. Rappelons que cet escamotage de la buse est réalisé sans modifier la position du guide-fil. Il est facile de mémoriser l'emplacement de ces brides et de programmer l'emplacement de zones, par exemple rectangulaires ou circulaires, pour lesquelles la commande numérique émettra un signal actionnant la suppression de l'injection et la remontée en position de repos de la buse , dès que le trajet de celle-ci d'engage dans l'une de ces zones. L'usinage peut ne pas être interrompu pendant le contournement de cet obstacle, par exemple en ayant recours à une stratégie de protection telle que celles définies dans la demande suisse 100/89.

Ainsi des stratégies de protection permettant de modifier des paramètres d'usinage lorsque la hauteur de la pièce varie ou lors de l'attaque d'un bord de pièce , par exemple, telles celles définies dans la demande mentionnée ci-dessus, peuvent être utilisées sans programmation supplémentaire grâce au dispositif d'injection "intelligent" de la présente invention.

Le dispositif d'injection de fluide d'usinage selon la présente invention peut présenter une infinité de formes d'exécution. Seule l'une des nombreuses variantes possibles a été illustrée schématiquement et à titre d'exemple par le dessin annexé

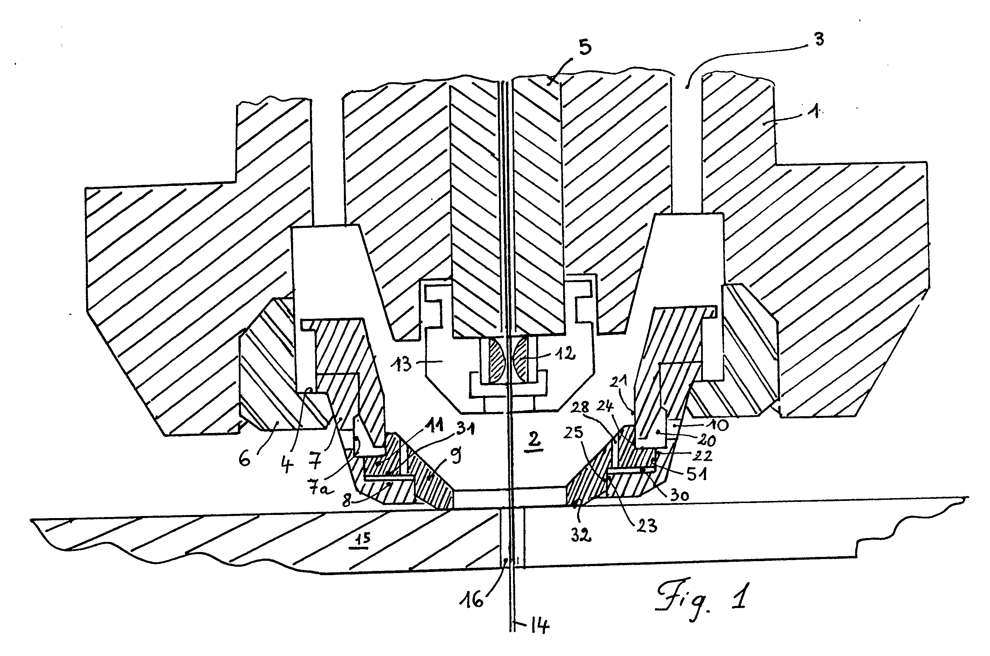

La figure 1 montre un dispositif selon l'invention en position de travail avec son axe disposé verticalement, perpendiculairement à la surface de la pièce à usiner.

La figure 2 schématise un dispositif selon l'invention en position de travail puis de repos.

Un boîtier 1 est fixé à l'extrémité d'une tête d'usinage , la tête illustrée ici étant une tête supérieure. Seule l'extrémité en regard de la pièce à usiner est représentée dans le dessin, avec le schéma du guide-fil 12 et de la buse d'enfilage 13 montés dans le fourreau 5. Le liquide d'usinage est amené dans la chambre d'injection 2 par des canaux 3 ménagés de part et d'autre du fourreau 5.

Une bague 6 fixée à l'extrémité du boîtier 1 est munie d'un rebord 4 sur lequel repose une pièce tronconique 7. Cette dernière, formée de deux éléments emboîtés l'un dans l'autre, est profilée de manière à présenter un évidement 7a, et un rebord 8 sur lequel repose la buse 9. Cette pièce est percée d'orifices 10 mettant l'évidement 7a en communication avec l'atmosphère.

La buse 9, également tronconique, est munie d'un épaulement 11 profilé de manière à obstruer l'évidement 7a en formant ainsi une chambre annulaire 20, et à reposer sur le rebord 8 de la pièce 7 tout en coulissant le long de la portion de paroi cylindrique 22 de cette pièce 7, formant ainsi une chambre annulaire étanche 30.

Cette buse 9 présente ainsi trois portions de paroi cylindriques 24, 51 et 25 qui coulissent respectivement le long des portions de paroi cylindriques 21, 22 et 23 de la pièce 7. Des orifices 28 mettent en communication cette chambre 30 avec la chambre d'injection 2 délimitée par le boîtier 1, le fourreau 5, la pièce 7 et la buse 9. L'orifice de sortie de cette dernière est en regard de l'extrémité du fourreau et l'axe du jet émis par la buse 9 se confond avec celui du fil 14 lorsque celui-ci est perpendiculaire à la surface de la pièce à usiner 15.

Pour que la buse 9 et la pièce 7 ne puissent faire office d'électrodes et être ainsi accidentellement elles-mêmes usinées par le fil, elles seront de préférence réalisées en un matériau isolant, par exemple en matière plastique. Le liquide d'usinage est amené sous forte pression (réalisée par des moyens connus non représentés) à la chambre 2 à travers le canal 3. La pression de ce liquide pousse la pièce 7 contre le rebord 4, et permet à la pièce 7 de venir s'emboîter de façon étanche dans la bague 6, évitant ainsi que le liquide ne s'échappe entre les deux. L'alésage du guide-fil 12 est en général très peu supérieur à la section du fil 14, ce qui empêche que le liquide d'usinage ne s'échappe en quantité notable par cette ouverture. Néanmoins, on peut prévoir un joint supplémentaire (non représenté) autour du fil, si on le désire.

La buse 9 coulisse facilement le long de la pièce 7; comme la surface inférieure 31 de son épaulement 11 a été choisie de façon à ce que la force exercée sur elle par le liquide sous pression dans la chambre 30 contrebalance totalement la force exercée sur elle par le liquide sous pression dans la chambre d'injection 2, elle est en équilibre lorsqu'elle fonctionne en émettant un jet de liquide dans la fente 16 usinée dans la pièce 15 par le fil 14. Comme la buse n'exerce pratiquement aucune poussée ou seulement une poussée très faible sur la pièce à usiner, cette dernière n'exerce pratiquement sur elle aucune force de réaction. Seule la réaction opposée par la pièce au jet et transmise par ce dernier à la tête d'usinage est à prendre en compte. Dans cet exemple, la face 32 du nez de la buse 9 qui vient en contact avec la pièce 15 présente une section d'un centimètre de diamètre, et son embouchure un diamètre de 7 millimètres.

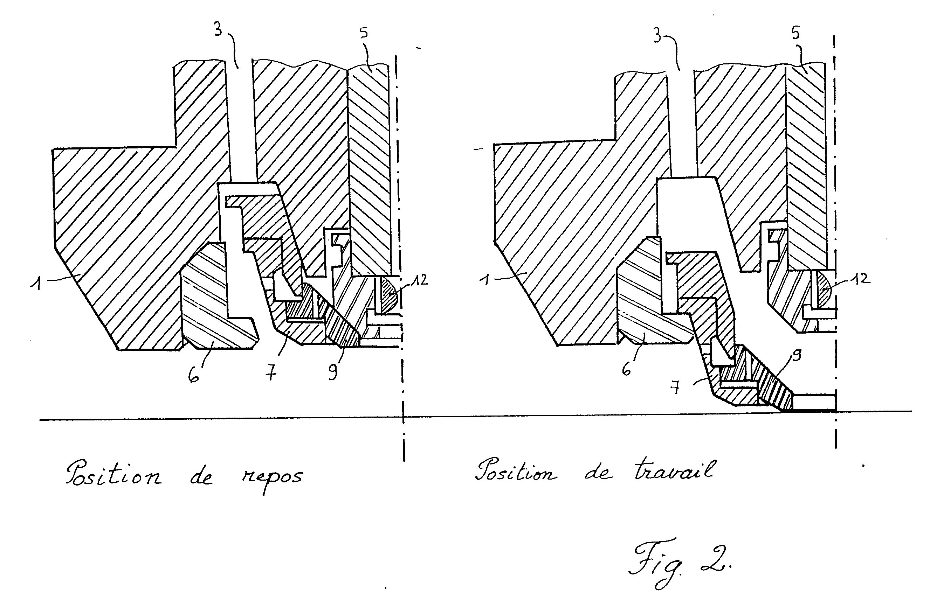

L'élément mobile 7 est profilé de manière à pouvoir se rétracter complètement dans le boîtier 1 et la buse 9 est profilée de manière à pouvoir se rétracter complètement dans cet élément 7 ( voir figure 2 ).

La force de réaction transmise à la tête d'usinage lors du fonctionnement de la buse est donc proportionnelle à la surface du jet. Par contre, avec un dispositif du type de celui décrit dans la demande de brevet EP 271.439, la buse 9 coulissant simplement le long de la pièce 7 tout en étant retenue par un ressort fixé au fourreau 5 (donc sans le dispositif à chambre de pression 30 décrit ici), cette force de réaction serait proportionnelle à toute la surface de contact buse-pièce, c'est-à-dire environ le double de celle exercée sur le dispositif de la présente invention.

La constitution du dispositif de la présente invention, selon laquelle une buse 9 de faible diamètre coulisse le long d'une pièce 7 montée entre elle et le boîtier 1, présente un autre avantage : même lorsque la pression dans la chambre 30 est telle qu'elle ne contrebalance qu'une partie de la pression de la chambre d'injection, du fait de la faible section de l'orifice de la buse par rapport à celle du boîtier 1, toute variation de sa position le long du fil 14 (provoquée, par exemple, par des inégalités de la surface de la pièce usinée) ne transmettra qu'une faible poussée au liquide de la chambre d'injection et donc à la tête d'usinage, en particulier au guide-fil 12.

Comme mentionné ci-dessus, le dispositif d'injection selon la présente invention n'est pas limité à cet exemple et peut présenter une infinité de formes d'exécution :

- l'ensemble composé par l'élément mobile et la buse peut ne pas être monté de manière à se rétracter en cas de choc frontal, contrairement au mode de réalisation illustré ci-dessus (figure 2);

- l'élément mobile peut être profilé de manière à basculer hors de sa position de travail sous l'action de forces extérieures non parallèles à ladite force de rappel, comme décrit dans EP 271.439.

- un ressort ou tout autre organe élastique peut être disposé entre l'élément mobile et le rebord du boîtier sur lequel repose cet élément pour aider la rétraction de l'élément mobile;

- un ressort peut être disposé au-dessus de cet élément de manière à le rappeler, après rétraction, en position de travail;

- l'embouchure de la buse, au lieu d'être cylindrique avec un axe perpendiculaire à la pièce, peut être oblique, le dispositif présentant par exemple, un moyen de faire tourner la buse autour d'un axe vertical afin de diriger le jet contre la flèche du fil;

- un système permettant de coincer la pièce mobile en position de repos (rétractée dans la chambre d'injection) peut être installée par exemple sur cette pièce, comme le joint O-ring décrit par exemple dans EP 271.439;

- la pièce mobile et la buse peuvent présenter d'autres formes qu'une forme tronconique; toutefois cette dernière conduit à un minimum d'encombrement dans la zone d'usinage;

- la buse peut être profilée de manière à ce que la pression réalisée dans la chambre 30 ne contrebalance qu'une partie des forces la poussant vers la pièce à usiner, dans le but de diminuer la force de réaction exercée sur le dispositif sans annuler cette force;

- la surface de la buse en contact avec la pièce à usiner n'ayant pratiquement aucune influence sur la force de réaction exercée sur la tête d'usinage, elle peut être aussi grande que désiré (son embouchure étant toutefois de préférence aussi étroite que possible).

**Revendications**

1. Dispositif d'injection pour liquide d'usinage sous pression comportant une buse (9) coulissant dans un élément mobile (7) qui coulisse lui-même dans un boîtier (1) fixé à une tête d'usinage, ce boîtier (1), cet élément mobile (7) et cette buse (9) délimitant une chambre d'injection (2) avec la base de cette tête, dans lequel

- la buse (9) et l'élément mobile (7) sont profilés de manière à délimiter une chambre de pression (30) le long de l'une des faces d'un épaulement (11) ménagé à la périphérie de la buse (9), ainsi qu'une deuxième chambre (20) le long de la face opposée de cet épaulement (11),

- la buse (9) présente des orifices (28) faisant communiquer cette chambre de pression (30) avec la chambre d'injection (2),

- l'élément mobile (7) présente des orifices (10) pouvant mettre la deuxième chambre (20) en communication avec la pression athmosphérique,

- la chambre de pression (30) et la deuxième chambre (20) sont disposées de part et d'autre dudit épaulement (11) de manière à ce que la pression régnant dans la chambre de pression (30) et la pression régnant dans la chambre d'injection (2) agissent sur la buse (9) en sens opposé.

2. Dispositif selon la revendication 1, dans lequel l'épaulement (11) de la buse (9) est dimensionné de manière à délimiter une chambre de pression (30) dont la section a une surface égale à celle de la projection, sur un plan parallèle à cet épaulement (11), de la paroi de la buse (9) canalisant le jet.

3. Dispositif selon la revendication 1, dans lequel l'épaulement (11) est orthogonal à l'axe du dispositif d'injection.

4. Dispositif selon la revendication 1, dans lequel l'élément mobile (7) est tronconique.

5. Dispositif selon la revendication 1, dans lequel la buse (9) est tronconique.

6. Dispositif selon la revendication 1, dans lequel l'élément mobile (7) est rétractable dans le boîtier (1).

7. Dispositif selon la revendication 1, dans lequel la section de l'orifice de la buse (9) est faible par rapport à celle du boîtier (1).

8. Machine d'électroérosion pour découper une pièce avec un fil-électrode, présentant sur au moins l'une de ses têtes d'usinage un dispositif d'injection selon la revendication 1, pour projeter un liquide d'usinage le long de ce fil (14) et pour irriguer la fente (16) usinée dans la pièce (15).

9. Machine selon la revendication 8, dans laquelle la tête d'usinage portant ce dispositif d'injection est montée sur une table à mouvements croisés.

10. Procédé de mise en action du dispositif selon la revendication 1, dans lequel la poussée exercée sur la buse (9) par le liquide de la chambre de pression (30) contrebalance en partie la composante, parallèle à cette poussée, de la pression exercée sur elle par le liquide de la chambre d'injection (2).

11. Procédé selon la revendication 10, dans lequel la poussée exercée sur la buse (9) par le liquide de la chambre de pression (30) équilibre la composante, parallèle à cette poussée, de la pression exercée sur elle par le liquide de la chambre d'injection (2).

12. Procédé selon la revendication 10, dans lequel la buse (9) ne jaillit de l'élément mobile (7) que lorsque le jet de liquide émis par la buse (9) rencontre un obstacle proche.

13. Procédé selon la revendication 10, dans lequel un retrait vertical de la buse (9) ne transmet qu'une faible poussée au liquide de la chambre d'injection (2) et donc à la tête d'usinage par suite de la faible section de son orifice par rapport à la section du boîtier (1).

Fig. 1

Position de repos       Position de travail

Fig. 2.

EP 0 381 277 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN vol. 11, no. 392 (M-653)(2839) 22 décembre 1987, & JP-A-62 157725 (FANUC LTD) 13 juillet 1987, * le document en entier * | 1 | B23H7/10 |
| | | | **DOMAINES TECHNIQUES RECHERCHES (Int. Cl.5 )** |
| | | | B23H |

Le présent rapport a été établi pour toutes les revendications

| Lieu de la recherche | Date d'achèvement de la recherche | Examinateur |
|---|---|---|
| LA HAYE | 28 MARS 1990 | DAILLOUX C. |

EPO FORM 1503 03.82 (P0402)